# EUROPEAN PATENT SPECIFICATION

(11) **EP 2 640 137 B1**
(45) Date of publication and mention of the grant of the patent: **04.03.2015**
(21) Application number: 13158134.0
(22) Date of filing: 07.03.2013
(51) Int. Cl.: H04W 52/02

(54) **Method for attaching control devices to control system in mesh network**
Verfahren zum Anbringen von Steuervorrichtungen an ein Steuersystem in Mesh-Netzwerken
Procédé pour fixer des dispositifs de commande pour système de commande en réseau maillé

(30) Priority: 12.03.2012 FI 20125258
(43) Date of publication of application: 18.09.2013
(73) Proprietor: There Corporation OY, 65100 Vaasa (FI)
(72) Inventor: Syrjä, Mika, 00390 Helsinki (FI)
(74) Representative: Espatent Oy

(56) References cited:
- WO-A1-2011/124853
- WO-A2-2005/048472
- US-A1- 2010 008 276

## Description

### TECHNICAL FIELD

The present application generally relates to a system, method and apparatus for managing control devices in a control system in a mesh network.

### BACKGROUND ART

A control system typically comprises a node or functionality that controls. i.e., manages and uses a set of control devices, for example in a building or in other geographically limited area.

New control devices may be included to the control system by attaching, i.e. creating an association between the control device and the control system. In Z-Wave technology, the association is created by first setting the control system into an inclusion-mode and while in the inclusion-mode, by pushing a signal button at the target device. In Bluetooth™ the association is created by first searching potential devices and then pairing the selected target device by giving the four-digit secret pairing code, for example.

The control system may need to configure the attached control device, for example set message routing information or set measurement rules. The configuration procedures may form a task set of inquiries and commands that needs to be communicated with the control device during the introduction to the system. Once the task set is finished, the services of the control device can be presented in a user interface of a controlling apparatus and the user can take the services in use.

It is possible that messages in wireless mesh networks can be lost or even corrupt due to various reasons. For example, overlapping networks interfere, attenuation due to distance between transmitting and receiving entities, reflection and distortion caused by building constructions, etc. Used communication technology may incorporate retransmission capability, but this does not necessary guarantee that communication between the control system and the control device under introduction will succeed.

Used wireless technology specifications may mandate control system to do some specific tasks during the device introduction, for example setting routing information, device binding to another or to control system, etc. The list above is not exhaustive. Used wireless technology specifications may not describe what control system should do if one of these tasks could not be finished. In such situation the device under introduction may be in such state that the device configuration is incomplete and not all services the device is capable of offering can be used. A solution is needed for attaching the control devices autonomously and reliably completing the required tasks in the control device introduction over the mesh network without congesting the mesh network.

### SUMMARY

According to a first example aspect of the invention there is provided a method for dynamically managing control devices in a control system, the method comprising:
connecting a control device to an apparatus over the mesh network;
defining at least one configuration task for the control device;
transmitting in an active state, based on the at least one configuration task, a configuration message over the mesh network, to the control device;
changing to an idle state, for a time period, in response to failing to receive a reply message from the control device, and releasing the mesh network for other communication;
changing to the active state, in response to an expiration of the time period;
receiving the reply message from the control device over the mesh network; and
closing the at least one configuration task in response to the reply message from the control device.

In an embodiment, the method may further comprise:
defining a set of configuration tasks for the control device; and
providing control device functionality for a user of the apparatus in response to closing the set of configuration tasks for the control device.

The time period may be dynamic or fixed and defined by the apparatus settings by the user.

In an embodiment, the configuration task may comprise at least one of the following:
setting routing information;
binding the control device;
inquiring control device information; and
setting control device wake-up interval.

In an embodiment, the method may further comprise:
defining an application layer for providing application level service for a user;
defining an adaptation layer for providing the at least one configuration task for a wireless technology layer, which the at least one configuration task is required to be closed to enable the application layer to provide application level service for the user; and
defining the wireless technology layer for transceiving messages in the mesh network.

In an embodiment, the method may further comprise:
interrupting the time period in response to a wake-up of the control device and changing to the active state.

In an embodiment, the method may further comprise:
presenting, to a user of the apparatus, status information of the at least one configuration task.

According to a second example aspect of the invention there is provided an apparatus for managing control devices in a control system, the apparatus comprising:
a communication interface for transceiving, over a mesh network connection, messages between the apparatus and the control devices;
at least one processor; and
at least one memory including computer program code;
the at least one memory and the computer program code configured to, with the at least one processor, cause the apparatus to:
connect a control device to the apparatus over the mesh network;
define at least one configuration task for the control device;
transmit in an active state, based on the at least one configuration task, a configuration message over the mesh network, to the control device;
change to an idle state, for a time period, in response to failing to receive a reply message from the control device, and releasing the mesh network for other communication;
change to the active state, in response to an expiration of the time period;
receive the reply message from the control device over the mesh network; and
close the at least one configuration task in response to the reply message from the control device.

In an embodiment, the at least one memory and the computer program code further configured to, with the at least one processor, cause the apparatus to:
define an application layer for providing application level service for a user;
define an adaptation layer for providing the at least one configuration task for a wireless technology layer, which the at least one configuration task is required to be closed to enable the application layer to provide application level service for the user; and
define the wireless technology layer for transceiving messages in the mesh network.

The mesh network connection may comprise at least one of the following:
- Z-Wave; and
- Zigbee.

In an embodiment, the control device comprises at least one of the following:
- a sensor;
- an energy meter;
- a temperature meter;
- a humidity meter;
- a switch;
- a motion detector;
- a door opening/closing detector;
- a window opening/closing detector; and
- an input/output device.

According to a third example aspect of the invention there is provided a computer program embodied on a computer readable medium comprising computer executable program code which, when executed by at least one processor of an apparatus, causes the apparatus to:
connect a control device to the apparatus over the mesh network;
define at least one configuration task for the control device;
transmit in an active state, based on the at least one configuration task, a configuration message over the mesh network, to the control device;
change to an idle state, for a time period, in response to failing to receive a reply message from the control device, and releasing the mesh network for other communication;
change to the active state, in response to an expiration of the time period;
receive the reply message from the control device over the mesh network; and
close the at least one configuration task in response to the reply message from the control device.

Different non-binding example aspects and embodiments of the present invention have been illustrated in the foregoing. The above embodiments are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

The invention will be described, by way of example only, with reference to the accompanying drawings, in which:
- Fig. 1: shows a schematic picture of a system according to an example embodiment of the invention;
- Fig. 2: presents an example block diagram of a control system in which various embodiments of the invention may be applied;
- Fig. 3: presents an example block diagram of an apparatus in which various embodiments of the invention may be applied;
- Fig. 4: presents an example block diagram of a control device in which various embodiments of the invention may be applied;
- Fig. 5: shows a flow diagram showing operations in accordance with an example embodiment of the invention; and
- Fig. 6: shows a flow diagram showing phases in accordance with an example embodiment of the invention.

### DETAILED DESCRIPTION

In the following description, like numbers denote like elements.

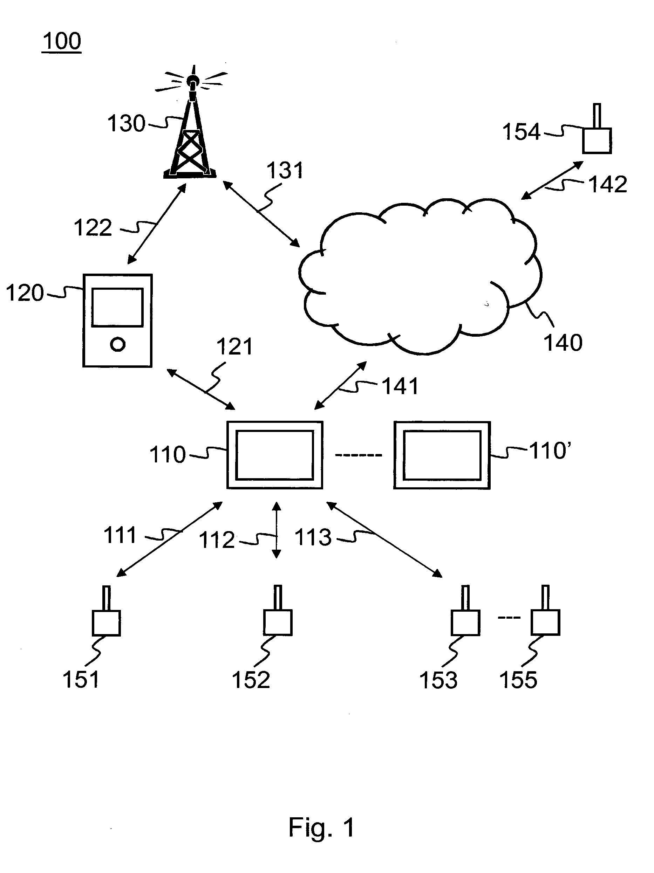

Fig. 1 shows a schematic picture of a system 100 according to an example embodiment of the invention. The system 100 comprises an apparatus 110 configured to be capable of managing control devices 151-153, such as sensors, meters or switches. The apparatus 110 is configured to be connectable to the control devices over a data connection 111-113. The data connection 111-113 may be a wired connection or a wireless connection. Furthermore, the data connection 111-113 may comprise a mesh network, a point-to-point network or a bus network, for example. The wired connection may comprise Universal Serial Bus (USB), High-Definition Multimedia Interface (HDMI), M-bus, or local area network (LAN) such as Ethernet, for example. The wireless connection may comprise Bluetooth™, Radio Frequency Identification (RF-ID), Z-Wave, ZigBee, Infrared or wireless local area network (WLAN), for example. The system 100 may further comprise a second apparatus 110' configured to be capable of managing the control devices 151-153, such as sensors, meters or switches. The control apparatus 110 may hand over the control devices 151-153 to the second control apparatus 110'.

The apparatus 110 is configured to send requests for control device data, controlling data or assignment/revocation information to the control devices 151-153. The control devices 151-153 are configured to send control device data, requests or assignment/revocation information to the apparatus 110. A user of the apparatus 110 may utilize a user interface of the apparatus 110 for communicating with the system 100, for example. The control devices 151-153 may also be configured to send control device data over the data connection 111-113 automatically to the apparatus 110. Such settings may comprise for example time of the day, amount of newly captured control device data or existence of the data connection 111-113 for the apparatus 110. The data communication between the apparatus 110 and the control devices 151-153 may also be triggered by a user of the apparatus 110 or a control process of the apparatus 110, for example.

In an embodiment, the system 100 comprises a remote control device 154 configured to be connectable to the apparatus 110 over a data connection 140-142. The data connection 140-142 may comprise any wired or wireless connection described for the connections 111-113 between the apparatus 110 and the control devices 151-153. The apparatus 110 and the remote control device 154 may be connected to a public data communication network 140, for example the Internet, over data connections 141 and 142, respectively.

The user terminal 120 may comprise a mobile phone, an internet tablet or a laptop computer, for example. The user terminal 120 is capable of downloading and locally executing software program code. The software program code may be a client application of a service application running on the apparatus 110 of the system 100. The user terminal 120 is configured to be connectable to a wireless communication network 130 over a wireless connection 122. The wireless connection 122 may comprise a mobile cellular network or a wireless local area network (WLAN), for example. The wireless communication network 130 may be connected to a public data communication network 140, for example the Internet, over a data connection 131.

In an embodiment, the user terminal 120 is configured to be connectable to the apparatus 110 over a data connection 121. The data connection 121 may comprise any wired or wireless connection described for the connection 111-113 between the apparatus 110 and the control devices 151-153.

In an embodiment, the system 100 may utilize for any data connection 111-113, 121-122, 131, 140-142 wireless or wired technologies, in which control devices are not statically configured to the control system 100 but the control devices can also be included to and excluded from the control system 100 through similar kind of dynamic procedure like in wireless technologies discussed earlier in this application. Such systems are often internet protocol (IP) based and typically based on some special control protocol on top of the internet protocol (IP).

The control devices that can be dynamically managed may comprise for example a sensor, an energy meter, a temperature meter, a humidity meter, a switch, a motion detector, a door opening/closing detector, a window opening/closing detector, and an input/output device.

In an embodiment, the control device 151-154 provides a set of services that the user can access through the control system 100 using the user interface of the apparatus 110 or the user terminal 120, for example. As an example, a switch device 151-154 may be considered to provide a switch service, which consists of the switch states 'on' and 'off' and corresponding functions defined for both states. One control device 151-154 may also provide multiple services. For example, an energy-meter device 151-154 may provide a switch-service and an energy-meter service. The service concept may also enable the control system 100 to provide additional attributes and methods for the control device 151-154. The additional attributes and methods may comprise various kinds of calculations or statistics based on the control device data the control device 151-154 is able to provide. Such attributes and methods may comprise event logs, authentication and access control mechanisms, convenience attributes like nicknames and location data, for example. Characteristically, the additional attributes and methods may be implemented in the control system 100 with no or minimum involvement of the control device 151-154.

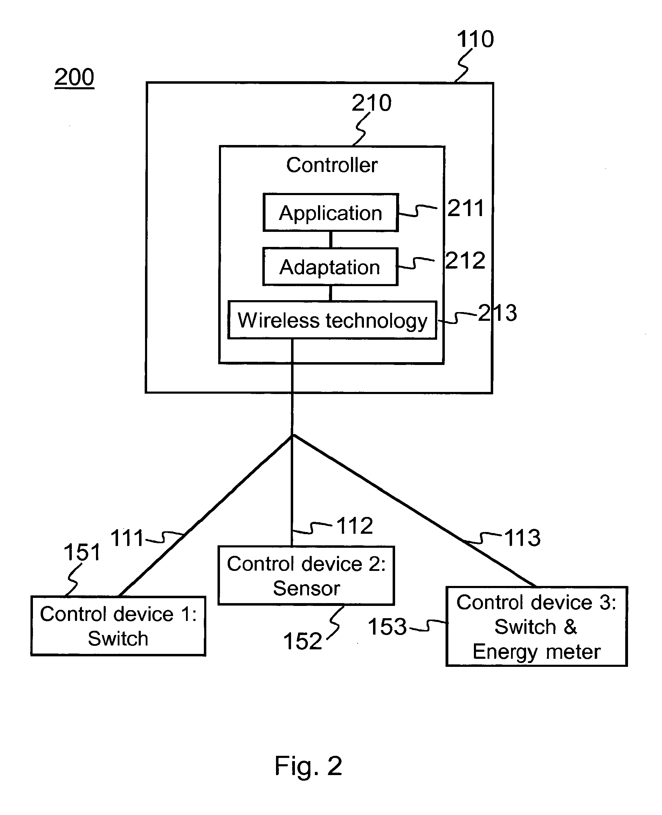

Fig. 2 presents an example block diagram of a mesh network control system 200 in which various embodiments of the invention may be applied. A control apparatus 110 of the mesh network may comprise for example a laptop computer, a desktop computer, a tablet or a server computer apparatus. The control system 200 enables attaching of control devices 151-153 and services to the apparatus 110. The services may be implemented in the control apparatus 110 as service objects provided by an application layer 211. If the control device 151-153 is attached to the apparatus 110, the control device 151-153 may be assigned to the service object of the application layer 211 providing service functionality for the user.

The mesh network 200 control apparatus 110 may further comprise a system controller 210. The system controller 210 incorporates a wireless technology specific network controller layer 213, an adaptation layer 212 and the application layer 211. The application layer 211 takes care of the service logic, as described above.

The adaptation layer 212 may convert system controller 210 internal communication signals to wireless technology communication signals. The wireless technology controller layer 213 may incorporate wireless technology specific retransmissions.

The wireless technology specific network layer 213 may take care of communication with the adaptation layer 212 and nodes 151-153 in the mesh network 200. It is technology specific how the node 151-153 is added to the mesh network 200. After the node 151-153 has been added and it is known to the system controller 210, configuration tasks may take place. The system controller 210 starts to execute set of tasks, inquiries and commands, which may be pre-configured or dynamic as the system controller 210 learns more about the node 151-153 introduced to the system 200. In an embodiment, the set of tasks executed by the system controller 210 may be affected by the system controller capabilities. The system controller 210 may for example inquire device information, e.g. manufacturer, device type, serial number etc. The list above is not exhaustive. The system controller 210 may also set device configuration, for example message routing information or device wake-up interval if the device is battery operated and it turns on the radio within configured intervals for communication with wireless technology controller 213 or with other nodes 151-153 in the mesh network 200. For such battery operated devices the system controller can set a short wake-up signal that can be used as a task execution trigger.

In an embodiment, the task execution trigger may comprise, instead of the wake-up signal, a triggering message indicating a device active state. Such triggering message may be user initiated or not and comprise, for example, a temperature value, a meter value and a door opening/closing signal. The control device 151-153 may send the triggering signal to be used as a task execution trigger. The device active state means that the control device radio is turned on and communication with the control device 151-153 is possible.

Once a task has been completed, the system controller 210 may select the next task and execute it right away. If the task fails, the system controller 210 may fall in "sleep state" for a length of period which can be pre-configured or dynamically decided. This way the system controller 210 may prevent congesting the mesh network 200, as in normal case the system controller 210 would try to execute the task again right away after the previous try failed. While the system controller 210 is in sleep state the mesh network 200 is available for other communication, for example energy meter device value reading. If the system controller 210 is in sleep state and a battery operated control device 151-153 that is under introduction wakes up, such wake up can be used as a trigger to continue task execution even though the sleep state period has not finished yet. This ensures faster device introduction.

Once all tasks have been completed, the control device 151-153 with related services is ready to be used by the user of the apparatus 110. Task execution and task set finishing can be shown in the user interface of the apparatus 110 to reflect the progress, so that the end user knows status of the device introduction.

When the user needs to communicate with the control system 200, user requests are delivered by the controller 210 to the desired service object of the application layer 211, which in turn communicates with the adaptation layer 212 before transmitting messages via the wireless technology layer 213 to the control device 151-153. Such communication may be utilized using a data connection 111-113. The data connection 111-113 may comprise for example Z-Wave in the mesh network 200.

The control system 200 reduces congestion in the mesh network and enables reliable and user-friendly attaching of control devices 151-153 to the control apparatus 110.

In an embodiment, the control device 151-153 comprises an energy meter of a rental holiday home and the service provided for the user is energy metering of a tenant living in the rental holiday home. The energy consumption of the tenant during her or his stay can be measured by assigning the energy meter to the tenant at the beginning of the stay and revoking the energy meter at the end of the stay.

In an embodiment, a control device 151 may comprise a switch, a control device 152 may comprise a sensor and a control device 153 may comprise a switch and an energy meter, for example. The control devices 151-153 are attached to the apparatus 110 by user request. In response to the request, for example, the controller 210 informs service objects of the application layer 211. Based on the received information the service objects of the application layer 211 assign with corresponding control devices 151-153 using the configuration tasks created by the adaptation layer 212. Configuration messages provided by the adaptation layer 212 are transmitted to the corresponding control devices 151-153 using the wireless technology layer 213 messages. Thus the service objects of the application layer 211 are attached to the corresponding control devices 151-153. Switching energy mode as active/inactive may be carried out with the application layer objects based on user requests and communicating corresponding control data to the control device 151 comprising the switch. Measuring temperature may be carried out with another service object of the application layer 211 and metering energy consumption may be carried out with still another service object of the application layer 211 based on user requests and communicating corresponding control data to the control device 153 comprising the energy meter. Energy metering data from the control device 153 may be communicated over the data connection 113 per request or automatically, for example periodically. A single service object or application of the application layer 211 may also comprise a plurality of service objects or applications.

In an embodiment, at least one data connection 111-113 is based on Z-Wave technology. Z-Wave is a proprietary wireless communications protocol designed for home automation, specifically to remote control applications in residential and commercial environments. The technology uses a low-power radio embedded or retrofitted into electronic devices and systems, such as lightning, home access control, entertainment systems, and household appliances.

Z-Wave communicates using a low-power wireless technology designed specifically for remote control applications. The Z-Wave wireless protocol is optimized for reliable and low-latency communication of small data packets, unlike typical wireless local area network systems that are designed primarily for high-bandwidth data flow. Z-Wave operates in the sub-gigahertz frequency range, around 900MHz. This band competes with some cordless telephones and other consumer electronics devices, but avoids interference systems that operate on the crowded 2.4GHz band. Z-Wave is designed to be easily embedded in consumer electronics products, including battery operated devices such as remote controls, smoke alarms and security sensors, for example.

Z-Wave is a mesh networking technology, where each node or device 110, 151-153 on the network is capable of sending and receiving control commands through walls or floors and use intermediate nodes to route around household obstacles or radio dead spots that might occur in the home. Z-Wave devices, like control devices 151-153 can work individually or in groups, and can be programmed into scenes or events that trigger multiple control devices 151-153, either automatically or via remote control. By adding Z-Wave to control system 200, it is possible to control and monitor for example household functions via remote control, based on manual or automated decisions. The control can be applied to a single control device 151-153 or to a group of control devices 151-153, in a single room, zone or throughout the entire building. One benefit of Z-Wave over power line communication technologies is the ability to function in older houses lacking a neutral wire. Z-Wave control devices 151-153 can also be monitored and controlled from outside of the building by way of a gateway that combines Z-Wave with broadband Internet access, as showed in Fig. 1.

In an embodiment, Z-Wave enabled thermostat 153 is able to raise or lower an indoor temperature of a building automatically, based on commands or sensor data from Z-Wave enabled daylight sensor 112. Grouped scene controls can ensure that unnecessary energy consumption is minimized by various all-off states for systems throughout the building, such as lightning, appliances and home entertainment systems.

In an embodiment, Z-Wave based system 200 can transceive commands based on real time conditions, and is able to control devices 151-153 in intelligent groupings, hence allowing novel extensions of traditional home security concepts. As an example, the opening of a Z-Wave enabled door lock 151-153 can deactivate a security system, turn on lights 151-153 when children arrive home from school, and send a notification to a parent's computer or cell phone via the Internet. Opening a Z-Wave enabled garage door 151-153 can trigger exterior and interior home lights, while a Z-Wave motion detector 151-153 can trigger an outdoor security light 151-153 and a webcam 151-153, which would allow the end user to monitor the home while away.

In an embodiment, Z-Wave's ability to command multiple control devices 151-153 as a unified event makes a system 200 well suited for home audio and video applications. For example, a simple "Play DVD" command on the remote control 110 could turn on the needed components 151-153, set them to the correct inputs and even lower motorized shades and dim the room lights.

In an embodiment, the control system 200 may comprise a second control apparatus 110' as illustrated in Fig. 1. The functional structure of the second control apparatus 110' corresponds to the structure of the control apparatus 110 provided in Fig. 2.

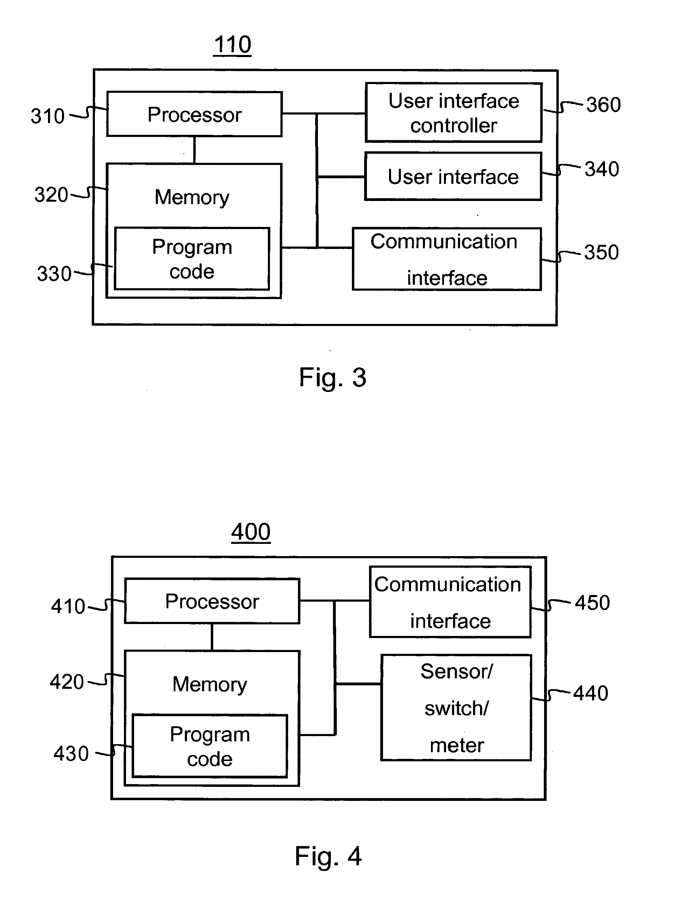

Fig. 3 presents an example block diagram of an apparatus 110 in which various embodiments of the invention may be applied. The apparatus 110 may be a laptop, a desktop, a tablet, a server computer or other computer apparatus.

The general structure of the apparatus 110 comprises a user interface 340, a communication interface 350, a processor 310, and a memory 320 coupled to the processor 310. The apparatus 110 further comprises software 330 stored in the memory 320 and operable to be loaded into and executed in the processor 310. The software 330 may comprise one or more software modules and can be in the form of a computer program product. A service object, a service function, an application layer 211, an adaptation layer 212 and a wireless technology layer 213, may be comprised in the software modules. The apparatus 110 may further comprise a user interface controller 360.

The processor 310 may be, e.g., a central processing unit (CPU), a microprocessor, a digital signal processor (DSP), a graphics processing unit, or the like. Fig. 3 shows one processor 310, but the apparatus 110 may comprise a plurality of processors. A controller 210 may be comprised by the processor 310.

The memory 320 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 110 may comprise a plurality of memories. The memory 320 may be constructed as a part of the apparatus 110 or it may be inserted into a slot, port, or the like of the user apparatus 110 by a user. The memory 320 may serve the sole purpose of storing data, or it may be constructed as a part of an apparatus serving other purposes, such as processing data.

The user interface controller 360 may comprise circuitry for receiving input from a user of the apparatus 110, e.g., via a keyboard, graphical user interface shown on the display of the user interfaces 340 of the apparatus 110, speech recognition circuitry, or an accessory device, such as a headset, and for providing output to the user via, e.g., a graphical user interface or a loudspeaker.

The communication interface module 350 implements at least part of data transmission. The communication interface module 350 may comprise, e.g., a wireless or a wired interface module. The wireless interface may comprise such as a WLAN, Z-Wave, Zigbee, Bluetooth™, Infrared (IR), Radio Frequency Identification (RF ID), GSM/GPRS, CDMA, WCDMA, or LTE (Long Term Evolution) radio module. The wired interface may comprise such as Universal Serial Bus (USB), Local Area Network (LAN) such as Ethernet or M-bus, for example. The communication interface module 350 may be integrated into the apparatus 110, or into an adapter, card or the like that may be inserted into a suitable slot or port of the apparatus 110. The communication interface module 350 may support one data interface technology or a plurality of technologies. The apparatus 110 may comprise a plurality of communication interface modules 350. Data communication between a device object and a control device may be transmitted using the communication interface 350. Furthermore, user communication data from a remote user terminal 120 may also be transmitted using the communication interface 350.

A skilled person appreciates that in addition to the elements shown in Fig. 3, the apparatus 110 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the apparatus 110 may comprise a disposable or rechargeable battery (not shown) for powering when external power if external power supply is not available.

In an embodiment, the system 100, 200 may comprise a second control apparatus 110' as illustrated in Fig. 1. The block diagram of the second control apparatus 110' corresponds to the block diagram of the control apparatus 110 provided in Fig. 3.

Fig. 4 presents an example block diagram of a control device 400 in which various embodiments of the invention may be applied. The control device 400 may be a sensor, a switch or a meter, for example.

The general structure of the control device 400 comprises a processor 410, and a memory 420 coupled to the processor 410. The control device 400 further comprises software 430 stored in the memory 420 and operable to be loaded into and executed in the processor 410. The software 430 may comprise one or more software modules and can be in the form of a computer program product.

The processor 410 may be, e.g., a central processing unit (CPU), a microprocessor, a digital signal processor (DSP), a graphics processing unit, or the like. Fig. 4 shows one processor 410, but the control device 400 may comprise a plurality of processors.

The memory 420 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The control device 400 may comprise a plurality of memories. The memory 420 may be constructed as a part of the control device 400 or it may be inserted into a slot, port, or the like of the control device 400 by a user. The memory 420 may serve the sole purpose of storing data, or it may be constructed as a part of an apparatus serving other purposes, such as processing data.

The control device 400 may further comprise a sensor/switch/meter element 440 that may comprise a sensor, an energy meter, a temperature meter, a humidity meter, a switch, a motion detector, a door opening/closing detector, a window opening/closing detector, or an input/output device.

The communication interface module 450 implements at least part of data transmission. The communication interface module 450 may comprise, e.g., a wireless or a wired interface module. The wireless interface may comprise such as a WLAN, Z-Wave, Zigbee, Bluetooth™, Infrared (IR), Radio Frequency Identification (RF ID), GSM/GPRS, CDMA, WCDMA, or LTE (Long Term Evolution) radio module. The wired interface may comprise such as Universal Serial Bus (USB), Local Area Network (LAN) such as Ethernet or M-bus, for example. The communication interface module 450 may be integrated into the control device 400, or into an adapter, card or the like that may be inserted into a suitable slot or port of the control device 400. The communication interface module 450 may support one data interface technology or a plurality of technologies. The control device 400 may comprise a plurality of communication interface modules 450. Data communication between a device object and a control device may be transmitted using the communication interface 450.

A skilled person appreciates that in addition to the elements shown in Fig. 4, the control device 400 may comprise other elements, such as microphones, displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the control device 400 may comprise a disposable or rechargeable battery (not shown) for powering when external power if external power supply is not available

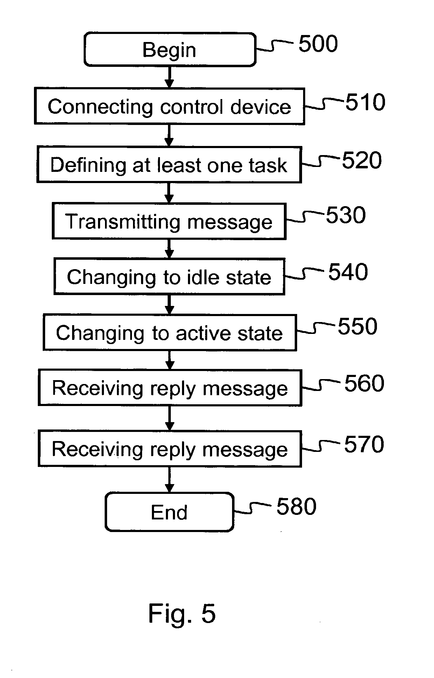

Fig. 5 shows a flow diagram showing operations in accordance with an example embodiment of the invention. In step 500, the method for attaching control devices to a control system in a mesh network is started. In step 510, a control device is connected to an apparatus over the mesh network. In step 520, at least one configuration task is defined for the control device. Based on the at least one configuration task, a configuration message is transmitted in an active state over the mesh network to the control device, in step 530. In step 540, the apparatus is changed to an idle state, for a time period, in response to failing to receive a reply message from the control device, and releasing the mesh network for other communication. In step 550, the apparatus is changed to the active state, in response to an expiration of the time period. The reply message is received from the control device over the mesh network in step 560 and the at least one configuration task is closed in response to the reply message from the control device, in step 570. The method is ended in step 580.

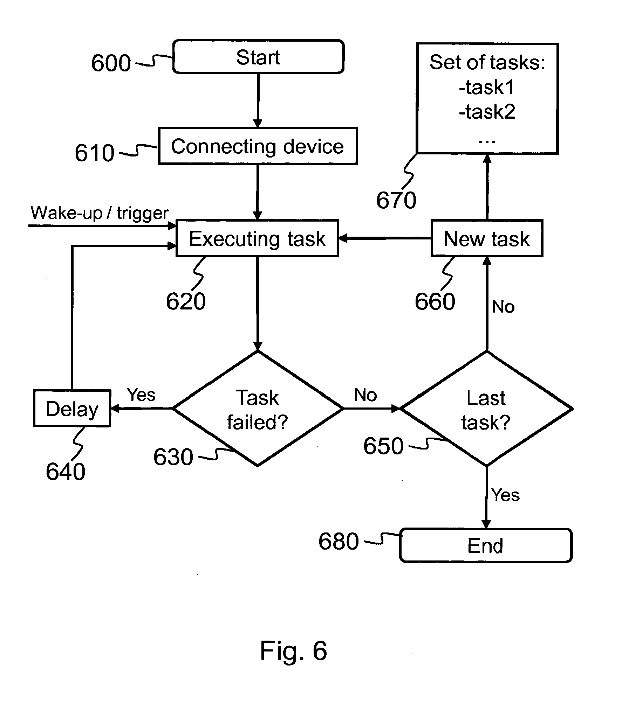

Fig. 6 shows a flow diagram showing phases in accordance with an example embodiment of the invention. Attaching of a control device is first started in item 600. When the new control device is connected over a mesh network to the control system in item 610, the control system needs to recognize the control device in order to offer control device services to the end user via a user interface of an apparatus. The control device may provide a variety of services such as meters (energy meters, temperature meters, humidity meters, etc.), switches, motion detectors, door/window detectors, IO-devices etc. The list above is not exhaustive. The control system may also need to configure the control device, for example set message routing information or set some measurement rules such as a report-on-change temperature value. The list above is not exhaustive.

The above procedures forms a task set of inquiries and commands that needs to be communicated with the control device during the control device introduction to the system. The task set is illustrated in item 670. Once the task set is finished, the services of the control device can be presented on the user interface and the end user can take the services in use. The task set may or may not be pre-configured, or it may even be dynamically formed during the introduction as the control system makes decisions which tasks to execute.

In item 620, at least one configuration task is defined and executed for the control device. The task may require a response from the control device, such as control device related information or acknowledgement. The control apparatus may transmit in an active state, based on the at least one configuration task, a configuration message over the mesh network, to the control device. The apparatus may determine if the control device responds until changing to idle state because of failing to complete the task, as illustrated in item 630. Alternatively, the control device may respond to the request with corrupted or incomplete response message that may lead to changing to idle state and failing to complete the task. Changing to idle state, for a time period, in response to failing to receive a reply message from the control device, enables releasing the mesh network for other communication between the control devices.

In item 640, the time period, or delay, is illustrated, in which the system controlling apparatus may be changed to idle state and releasing the mesh network for other communication. The apparatus is then changed to the active state, in response to an expiration of the time period and the failed task may be executed again. In response to receiving a reply message from the control device over the mesh network and closing the task a further check is done. In item 650, the control apparatus may check if further configuration tasks exist for the control device. If not, the procedure is ended 680 and the control device is successfully attached to the system and enabled to provide services to the user. If there are further configuration tasks to be done, a new task may be selected in item 660 from the task list 670 and proceeded to executing the task in item 620.

The control system may retry to execute the task until it has been finished satisfactory way and thus improving reliability. Between the retries is the delay 640, in order not to congest the network. The delay 640 can be pre-configured or dynamic. If the execution of the task fails, the control system will not step over to next task until the current task has been finished satisfactory way. When the task is finished, the control system steps over to next task right away, thus providing fast task set execution if there is no problems in the communication between the control system and the device under introduction and attachment.

It is possible that a message in wireless mesh network can be lost or even corrupted due to various reasons. For example, overlapping networks interfere, attenuation due to distance between transmitting and receiving entities, reflection and distortion caused by building constructions, etc. Used communication technology may incorporate retransmission capability, but this does not necessary guarantee that communication between the control system and device under introduction will succeed.

An adaptation layer of the system controller apparatus 110 may convert system controller internal communication method to the wireless technology communication methods. Wireless technology controller layer may incorporate wireless technology specific retransmissions. Different embodiments may be implemented in adaptation layer with for example threads or processes.

Wireless technology layer of the system controller apparatus 110 may take care of communication with adaptation layer and nodes in the mesh network. It is technology specific how the node is added to the mesh network. After node has been added and it is known to the system controller 210, configuration tasks may be executed.

In an embodiment, the system controller 210 may also set control device 151-153, 400 configuration, for example message routing information or device wake-up interval if the control device 151-153, 400 is battery operated. The control device 151-153, 400 may turn on the radio on configured intervals for communication with the wireless technology controller 213 of the system controller apparatus 110 or with other nodes in the mesh network. For such battery operated devices the system controller apparatus 110 may set a wake-up signal that can be used as a task execution trigger. The wake-up signal is also illustrated in item 620.

In an embodiment, the wake-up signal for the task execution 620 may comprise a message indicating an active state of the control device 151-153, 400. Such message may comprise, for example, a temperature value, a meter value or a door opening/closing status. The control device 151-153, 400 may send the message to the system controller apparatus 110 and the message can be used as the wake-up signal for the task execution 620. The active state of the control device 151-153, 400 typically means that the communication interface 450 (e.g. radio) is active and communication with the control device 151-153, 400 is possible.

Once one task has been completed satisfactory way in item 620, the system controller apparatus 110 selects next task and executes it right away. If task fails, the system controller apparatus 110 falls in sleep/idle state for a length of period which can be pre-configured or dynamically decided. This way the system controller apparatus 110 prevents congesting the mesh network, as in opposed case the system controller apparatus 110 would try to execute task again right away after previous try failed. While the system controller apparatus 110 is in sleep/idle state the mesh network is available for other communication, for example energy meter device value reading. If the system controller apparatus 110 is in sleep/idle state and battery operated device that is under introduction wakes up, the wake-up signal can be used as a trigger to continue task execution in item 620 even though the sleep/idle state period has not finished yet. This ensures faster device introduction. Instead of the wake-up signal, any message indicating the control device 151-153, 400 is in active state may be used. Such active state of the control device 151-153, 400 typically means that the communication interface 450 (e.g. radio) is active and communication with the control device 151-153, 400 is possible.

Once all tasks have been completed, the control device attachment is ready and the control device and services offered are ready to be used. Task execution and task set finishing can be shown on the user interface of the system controller apparatus to reflect the progress, so that the end user knows status of the control device introduction.

Different embodiments may provide a smart and reliable logic that ensures that the mesh network control device under introduction will be recognized and configured properly so that all the offered control device services can be properly used.

The time how quickly the control device is ready to be used from the point device introduction started till the task set completion depends on the sleep state delay length, the number of executed tasks and the number of used retries. Both parameters may be defined by the system controller apparatus or the user.

In an embodiment, a first system controller apparatus 110 may hand over the control devices 151-153, 400 to a second system controller apparatus 110'. The second system controller apparatus then may need to interrogate and/or configure the control devices 151-153, 400 in order to enable services provided by the control devices 151-153, 400. A first system controller 210 may transfer an initial set of control device identification information to a second system controller of the second system controller apparatus 110'. Such transfer may be utilized by the wireless technology layer of the system controllers, for example. After this, the second system controller apparatus 110' may utilize configuration and route setting between the second controller apparatus 110' and the control devices 151-153, 400 to identify, configure and present the services provided by the control devices 151-153, 400 for the user. Such configuration and route setting may be utilized by the adaptation layer of the system controllers, for example.

Various embodiments have been presented. It should be appreciated that in this document, words comprise, include and contain are each used as open-ended expressions with no intended exclusivity. If desired, the different functions discussed herein may be performed in a different order and/or concurrently with each other. Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method for attaching control devices to a control system in a mesh network, the method comprising:
connecting a control device to an apparatus over the mesh network;
defining at least one configuration task for the control device;
**characterized in that** the method further comprising:
transmitting in an active state, based on the at least one configuration task, a configuration message over the mesh network, to the control device;
changing to an idle state, for a time period, in response to failing to receive a reply message from the control device, and releasing the mesh network for other communication;
changing to the active state, in response to an expiration of the time period;
receiving the reply message from the control device over the mesh network; and
closing the at least one configuration task in response to the reply message from the control device.

2. The method of claim 1, further comprising:
defining a set of configuration tasks for the control device; and
providing control device functionality for a user of the apparatus in response to closing the set of configuration tasks for the control device.

3. The method of claim 1 or 2, wherein the time period is dynamic.

4. The method of any of claims 1 to 3, wherein the configuration task comprising at least one of the following:
setting routing information;
binding the control device;
inquiring control device information; and
setting control device wake-up interval.

5. The method of any of claims 1 to 4, further comprising:
defining an application layer for providing application level service for a user;
defining an adaptation layer for providing the at least one configuration task for a wireless technology layer, which the at least one configuration task is required to be closed to enable the application layer to provide application level service for the user; and
defining the wireless technology layer for transceiving messages in the mesh network.

6. The method of any of claims 1 to 5, further comprising:
interrupting the time period in response to a wake-up of the control device and changing to the active state.

7. An apparatus for managing control devices in a control system, the apparatus comprising:
a communication interface for transceiving, over a mesh network connection, messages between the apparatus and the control devices;
at least one processor; and
at least one memory including computer program code;
the at least one memory and the computer program code configured to, with the at least one processor, cause the apparatus to:
connect a control device to the apparatus over the mesh network;
define at least one configuration task for the control device;
transmit in an active state, based on the at least one configuration task, a configuration message over the mesh network, to the control device;
change to an idle state, for a time period, in response to failing to receive a reply message from the control device, and releasing the mesh network for other communication;
change to the active state, in response to an expiration of the time period;
receive the reply message from the control device over the mesh network; and
close the at least one configuration task in response to the reply message from the control device.

8. The apparatus of claim 7, the at least one memory and the computer program code further configured to, with the at least one processor, cause the apparatus to:
define an application layer for providing application level service for a user;
define an adaptation layer for providing the at least one configuration task for a wireless technology layer, which the at least one configuration task is required to be closed to enable the application layer to provide application level service for the user; and
define the wireless technology layer for transceiving messages in the mesh network.

9. The apparatus of any of claims 7 to 8, wherein the mesh network connection comprises at least one of the following:
- Z-Wave; and
- Zigbee.

10. The apparatus of any of claims 7 to 9, wherein the control device comprises at least one of the following:
- a sensor;
- an energy meter;
- a temperature meter;
- a humidity meter;
- a switch;
- a motion detector;
- a door opening/closing detector;
- a window opening/closing detector; and
- an input/output device.

11. A computer program embodied on a computer readable medium comprising computer executable program code, the computer executable program code, when executed by at least one processor of an apparatus, causes the apparatus to:
connect a control device to the apparatus over the mesh network;
define at least one configuration task for the control device;
transmit in an active state, based on the at least one configuration task, a configuration message over the mesh network, to the control device;
change to an idle state, for a time period, in response to failing to receive a reply message from the control device, and releasing the mesh network for other communication;
change to the active state, in response to an expiration of the time period;
receive the reply message from the control device over the mesh network; and
close the at least one configuration task in response to the reply message from the control device.

## Patentansprüche

1. Verfahren zum Anbinden von Steuervorrichtungen an ein Steuersystem in einem vermaschten Netz, wobei das Verfahren umfasst:
Verbinden einer Steuervorrichtung mit einem Gerät über das vermaschte Netz,
Definieren mindestens einer Konfigurationsaufgabe für die Steuervorrichtung;
**dadurch gekennzeichnet, dass** das Verfahren weiter umfasst:
Senden, in einem aktiven Zustand, basierend auf der mindestens einen Konfigurationsaufgabe, einer Konfigurationsnachricht über das vermaschte Netz an die Steuervorrichtung;
Wechseln in einen Leerlaufzustand für eine Zeitspanne in Reaktion auf ein Nicht-Erhalten einer Antwortnachricht von der Steuervorrichtung, und
Freigeben des vermaschten Netzes für andere Kommunikation;
Wechseln in den aktiven Zustand in Reaktion auf das Ablaufen der Zeitspanne;
Empfangen der Antwortnachricht von der Steuervorrichtung über das vermaschte Netz; und
Schließen der mindestens einen Konfigurationsaufgabe in Reaktion auf die Antwortnachricht von der Steuervorrichtung.

2. Verfahren nach Anspruch 1, weiter umfassend:
Definieren einer Reihe von Konfigurationsaufgaben für die Steuervorrichtung; und
Bereitstellen einer Steuervorrichtungsfunktionalität für einen Benutzer des Geräts in Reaktion auf ein Schließen der Reihe von Konfigurationsaufgaben für die Steuervorrichtung.

3. Verfahren nach Anspruch 1 oder 2, wobei die Zeitspanne dynamisch ist.

4. Verfahren nach einem der Ansprüche 1 bis 3, wobei die Konfigurationsaufgabe mindestens eines der folgenden umfasst:
Einstellen von Routing-Informationen;
Einbinden der Steuervorrichtung;
Anfragen von Steuervorrichtungsinformationen; und
Einstellen eines Aufwachintervalls der Steuervorrichtung.

5. Verfahren nach einem der Ansprüche 1 bis 4, weiter umfassend:
Definieren einer Anwendungsschicht zum Bereitstellen von Diensten auf Anwendungsebene für einen Benutzer;
Definieren einer Anpassungsschicht zum Bereitstellen der mindestens einen Konfigurationsaufgabe für eine Drahtlostechnologie-Schicht, wobei die mindestens eine Konfigurationsaufgabe geschlossen sein muss, um der Anwendungsschicht zu ermöglichen, Dienste auf Anwendungsebene für den Benutzer bereitzustellen; und
Definieren der Drahtlostechnologie-Schicht zum Senden/Empfangen von Nachrichten in dem vermaschten Netz.

6. Verfahren nach einem der Ansprüche 1 bis 5, weiter umfassend:
Unterbrechen der Zeitspanne in Reaktion auf ein Aufwachen der Steuervorrichtung und Wechseln in den aktiven Zustand.

7. Gerät zur Verwaltung von Steuervorrichtungen in einem Steuersystem, wobei das Gerät umfasst:
eine Kommunikationsschnittstelle zum Senden/Empfangen, über eine Verbindung in einem vermaschten Netz, von Nachrichten zwischen dem Gerät und den Steuervorrichtungen;
mindestens einen Prozessor; und
mindestens einen Speicher, der Computerprogrammcode einschließt;
wobei der mindestens eine Speicher und der Computerprogrammcode dazu eingerichtet sind, mit dem mindestens einen Prozessor das Gerät dazu zu veranlassen,
eine Steuervorrichtung mit dem Gerät über das vermaschte Netz zu verbinden;
mindestens eine Konfigurationsaufgabe für die Steuervorrichtung zu definieren;
in einem aktiven Zustand, basierend auf der mindestens einen Konfigurationsaufgabe, eine Konfigurationsnachricht über das vermaschte Netz an die Steuervorrichtung zu senden;
in einen Leerlaufzustand für eine Zeitspanne zu wechseln, in Reaktion auf das Nicht-Empfangen einer Aritwortnachricht von der Steuervorrichtung, und das vermaschte Netz für andere Kommunikation freizugeben;
in den aktiven Zustand zu wechseln, in Reaktion auf ein Ablaufen der Zeitspanne;
die Antwortnachricht von der Steuervorrichtung über das vermaschte Netz zu empfangen; und
die mindestens eine Konfigurationsaufgabe zu schließen, in Reaktion auf die Antwortnachricht von der Steuervorrichtung.

8. Gerät nach Anspruch 7, wobei der mindestens eine Speicher und der Computerprogrammcode weiter dazu eingerichtet sind, mit dem mindestens einen Prozessor das Gerät dazu zu veranlassen:
eine Anwendungsschicht zu definieren, um Dienste auf Anwendungsebene für einen Benutzer bereitzustellen;
eine Anpassungsschicht zu definieren, um die mindestens eine Konfigurationsaufgabe für eine Drahtlostechnologie-Schicht bereitzustellen, wobei die mindestens eine Konfigurationsaufgabe geschlossen sein muss, um der Anwendungsschicht zu ermöglichen, Dienste auf Anwendungsebene für den Benutzer bereitzustellen; und
die Drahtlostechnologie-Schicht zum Senden/Empfangen von Nachrichten in dem vermaschten Netz zu definieren.

9. Gerät nach einem der Ansprüche 7 oder 8, wobei die Verbindung in dem vermaschten Netz mindestens eines der folgenden umfasst:
- Z-Wave; und
- Zigbee.

10. Gerät nach einem der Ansprüche 7 bis 9, wobei die Steuervorrichtung mindestens eines der folgenden umfässt:
- einen Sensor;
- ein Energiemeßgerät;
- ein Temperaturmeßgerät;
- ein Feuchtigkeitsmeßgerät;
- einen Schalter;
- einen Bewegungsmelder;
- einen Türöffnungs-/Schließungs-Detektor;
- einen Fenster-Öffnungs-/Schließungs-Detektor; und
- eine Eingabe/Ausgabe-Vorrichtung.

11. Computerprogramm, enthalten auf einem computerlesbaren Medium, das computerausführbaren Programmcode umfasst, wobei der computerausführbare Programmcode, wenn von mindestens einem Prozessor eines Geräts ausgeführt, das Gerät dazu veranlasst:
eine Steuervorrichtung mit dem Gerät über das vermaschte Netz zu verbinden;
mindestens eine Konfigurationsaufgabe für die Steuervorrichtung zu definieren;
in einem aktiven Zustand, basierend auf der mindestens einen Konfigurationsaufgabe, eine Konfigurationsnachricht über das vermaschte Netz an die Steuervorrichtung zu senden;
in einen Leerlaufzustand für eine Zeitspanne zu wechseln, in Reaktion auf das Nicht-Empfangen einer Antwortnachricht von der Steuervorrichtung, und das vermaschte Netz für andere Kommunikation freizugeben;
in den aktiven Zustand zu wechseln, in Reaktion auf ein Ablaufen der Zeitspanne;
die Antwortnachricht von der Steuervorrichtung über das vermaschte Netz zu empfangen; und
die mindestens eine Konfigurationsaufgabe zu schließen, in Reaktion auf die Antwortnachricht von der Steuervorrichtung.

## Revendications

1. Procédé pour rattacher des dispositifs de commande à un système de commande dans un réseau maillé, le procédé comprenant les étapes consistant à :
connecter un dispositif de commande à un appareil sur le réseau maillé ;
définir au moins une tâche de configuration pour le dispositif de commande ;
**caractérisé en ce que** le procédé comprenant en outre les étapes consistant à :
transmettre dans un état actif, sur la base de ladite au moins une tâche de configuration, un message de configuration sur le réseau maillé, à destination du dispositif de commande ;
passer à un état inactif, pour une période de temps, en réponse au fait de ne pas réussir à recevoir un message de réponse en provenance du dispositif de commande, et libérer le réseau maillé pour d'autres communications ;
passer à l'état actif, en réponse à une expiration de la période de temps ;
recevoir le message de réponse en provenance du dispositif de commande sur le réseau maillé ;
et
fermer ladite au moins une tâche de configuration en réponse au message de réponse en provenance du dispositif de commande.

2. Procédé selon la revendication 1, comprenant en outre les étapes consistant à :
définir un ensemble de tâches de configuration pour le dispositif de commande ; et
fournir une fonctionnalité de dispositif de commande pour un utilisateur de l'appareil en réponse à la fermeture de l'ensemble des tâches de configuration pour le dispositif de commande.

3. Procédé selon la revendication 1 ou 2, dans lequel la période de temps est dynamique.

4. Procédé selon l'une quelconque des revendications 1 à 3, dans lequel la tâche de configuration comprend au moins une des étapes suivantes :
définir des informations de routage ;
associer le dispositif de commande ;
demander des informations de dispositif de commande ; et
ajuster l'intervalle de réveil du dispositif de commande.

5. Procédé selon l'une quelconque des revendications 1 à 4, comprenant en outre les étapes consistant à :
définir une couche d'application pour fournir un service de niveau d'application pour un utilisateur ;
définir une couche d'adaptation pour fournir ladite au moins une tâche de configuration pour une couche de technologie sans fil, laquelle au moins une tâche de configuration doit être fermée pour permettre à la couche d'application de fournir un service de niveau d'application pour l'utilisateur ; et
définir la couche de technologie sans fil pour émettre et recevoir des messages dans le réseau maillé.

6. Procédé selon l'une quelconque des revendications 1 à 5, comprenant en outre les étapes consistant à :
interrompre la période de temps en réponse à un réveil du dispositif de commande et passer à l'état actif.

7. Appareil pour gérer des dispositifs de commande dans un système de commande, l'appareil comprenant :
une interface de communication pour émettre et recevoir, sur une connexion de réseau maillé, des messages entre l'appareil et les dispositifs de commande ;
au moins un processeur ; et
au moins une mémoire comprenant un code de programme informatique ;
ladite au moins une mémoire et le code programme informatique étant configurés pour, avec ledit au moins un processeur, amener l'appareil à :
connecter un dispositif de commande à l'appareil sur le réseau maillé ;
définir au moins une tâche de configuration pour le dispositif de commande ;
émettre dans un état actif, sur la base de ladite au moins une tâche de configuration, un message de configuration sur le réseau maillé, à destination du dispositif de commande ;
passer à un état inactif, pour une période de temps, en réponse au fait de ne pas réussir à recevoir un message de réponse en provenance du dispositif de commande, et libérer le réseau maillé pour d'autres communications ;
passer à l'état actif, en réponse à une expiration de la période de temps ;
recevoir le message de réponse en provenance du dispositif de commande sur le réseau maillé ;
et
fermer ladite au moins une tâche de configuration en réponse au message de réponse en provenance du dispositif de commande.

8. Appareil selon la revendication 7, ladite au moins une mémoire et le code de programme informatique étant en outre configurés pour, avec ledit au moins un processeur, amener le dispositif à :
définir une couche d'application pour fournir un service de niveau d'application pour un utilisateur ;
définir une couche d'adaptation pour fournir ladite au moins une tâche de configuration pour une couche de technologie sans fil, laquelle au moins une tâche de configuration doit être fermée pour permettre à la couche d'application de fournir un service de niveau d'application pour l'utilisateur ; et
définir la couche de technologie sans fil pour émettre et recevoir des messages dans le réseau maillé.

9. Appareil selon l'une quelconque des revendications 7 à 8, dans lequel la connexion de réseau maillé comprend au moins un des protocoles suivants :
- Z-Wave ; et
- Zigbee.

10. Appareil selon l'une quelconque des revendications 7 à 9, dans lequel le dispositif de commande comprend au moins un des éléments suivants :
- un capteur ;
- un compteur d'énergie ;
- un dispositif de mesure de température ;
- dispositif de mesure de l'humidité ;
- un interrupteur ;
- un détecteur de mouvement ;
- un détecteur d'ouverture / fermeture de porte;
- un détecteur d'ouverture / fermeture de fenêtre ; et
- un dispositif d'entrée / sortie.

11. Programme informatique incorporé sur un support lisible par ordinateur comprenant du code de programme exécutable par ordinateur, le code de programme exécutable par ordinateur, lorsqu'il est exécuté par au moins un processeur d'un appareil, amène l'appareil à :
connecter un dispositif de commande à l'appareil sur le réseau maillé ;
définir au moins une tâche de configuration pour le dispositif de commande ;
émettre dans un état actif, sur la base de ladite au moins une tâche de configuration, un message de configuration sur le réseau maillé, à destination du dispositif de commande ;
passer à un état inactif, pour une période de temps, en réponse au fait de ne pas réussir à recevoir un message de réponse en provenance du dispositif de commande, et libérer le réseau maillé pour d'autres communications ;
passer à l'état actif, en réponse à une expiration de la période de temps ;
recevoir le message de réponse en provenance du dispositif de commande sur le réseau maillé ; et
fermer ladite au moins une tâche de configuration en réponse au message de réponse en provenance du dispositif de commande.
